# EUROPEAN PATENT SPECIFICATION

(11) **EP 2 762 802 B1**
(45) Date of publication and mention of the grant of the patent: **03.07.2019**
(21) Application number: 14153672.2
(22) Date of filing: 03.02.2014
(51) Int. Cl.: F25B 27/02, F25B 15/06, F25B 1/053

(54) **Chilled water system and method of operating chilled water system**
Gekühltes Wassersystem und Verfahren zum Betrieb des gekühlten Wassersystems
Système d'eau réfrigérée et procédé de fonctionnement de système d'eau réfrigérée

(30) Priority: 05.02.2013 JP 2013020628
(43) Date of publication of application: 06.08.2014
(73) Proprietor: Mitsubishi Shipbuilding Co., Ltd., Yokohama-shi Kanagawa 220-8401 (JP)
(72) Inventor: Mino, Masahiko, Tokyo 108-8215 (JP); Kano, Hiromasa, Tokyo 108-8215 (JP); Kanaga, Tatsuaki, Tokyo 108-8215 (JP)
(74) Representative: Henkel, Breuer & Partner

(56) References cited:
- WO-A1-02/086397
- DE-A1- 3 726 493
- JP-A- 2008 025 915
- JP-B2- 3 624 275
- US-A- 5 600 960

## Description

### Technical Field

The present invention relates to a chilled water system, and a method of operating the chilled water system.

### Background Art

In a passenger ship, a propeller is driven electrically in general. Moreover, since a passenger ship produce a larger heat in the ship than commercial ships other than passenger ships, a required cooling demand is also large, and refrigerant water (chilled water) is generated by an electric centrifugal chiller unit. Since the electric centrifugal chiller unit uses a large electric power generated in the passenger ship, reduction of the power for the chilled water system for generating this chilled water is in demand in order to suppress power consumption in passenger ships.

On the other hand, there is a method of generating the chilled water by using jacket cooling water (pressurized hot water) of an engine or waste heat recovered by an exhaust gas economizer so as to operate an absorption chiller unit, and this is one of methods effective in reduction of chilled water generation energy.

PTL 1 discloses an invention of a cogeneration system which can effectively use waste heat of an engine for driving a power generator in the absorption chiller unit and the like.

### Citation List

### Patent Literature

PTL 1: Japanese Unexamined Patent Application, Publication No. Hei 4-334705

WO 02/086397 A1 discloses an air conditioner that comprises an exhaust heat recovery unit for recovering exhaust heat in a heat transfer medium, a heat transfer medium passage in which the heat transfer medium outputted from the exhaust heat recovery unit flows, an auxiliary heating device, which is provided in the heat transfer medium passage, for heating the heat transfer medium, an absorption chiller, to which the heat transfer medium passage is connected, to be driven by heat of the heat transfer medium, a refrigerant passage, through which a refrigerant outputted from the absorption chiller flows, an indoor unit to which the refrigerant is supplied through the refrigerant passage, a heat transfer medium temperature detecting means for detecting the temperature of the heat transfer medium flowing through the heat transfer medium passage, a refrigerant temperature detecting means for detecting the temperature of the refrigerant flowing through the refrigerant passage, and a control portion for controlling an operation of driving the auxiliary heating device.

US 5 600 960 A discloses a method of minimizing energy use in a chiller and cooling tower system. The method comprises the steps of: determining a measure of chiller efficiency; determining a measure of cooling tower efficiency; determining a measure of the transfer rate of heat energy between the cooling tower and the chiller; calculating a near optimal water temperature as a function of the chiller work efficiency, the cooling tower efficiency and the transfer rate; and operating the cooling tower to provide a conditioned fluid at the temperatures to produce near optimal energy consumption.

DE 37 26 493 A1 discloses a method and a device for limiting the room temperature in the case of drive machines which are arranged in closed rooms and develop waste heat, such as, for example, compressors accommodated in halls for compensating the pressure losses of natural gas conducted in pipelines, the waste heat arising being carried off as a waste-gas flow into the atmosphere via a carrying-off arrangement.

JP 2008 025915 A discloses a hot water circulatory system in which a circulation pump, a flow control valve and a temperature sensor are provided.

JP 3 624275 B2 discloses a hot water circulation system in which a circulation pump and a three-way switching valve are provided.

### Summary of Invention

### Technical Problem

When the absorption chiller unit is operated by using engine waste heat for generating the chilled water, a waste heat amount according to an engine load condition of a plurality of engines or a plurality of power generation systems (with the plurality of engines as one power generation system) installed in one passenger ship, a required electric power amount, and a required cooling demand in the ship are changing from time to time. Thus, in the operation of the absorption chiller unit, it was difficult to effectively control a heat consumption in the absorption chiller unit in order to reduce the power consumption amount in the passenger ship as much as possible. Thus, in a conventional idea, the absorption chiller unit is required to be operated at constant load, while a centrifugal chiller unit is operated with a margin so as to compensate for an insufficient cooling load. Therefore, if an amount of available waste heat becomes smaller, a heat amount needs to be complemented by steam from a boiler or the like, which makes total efficiency poorer than the centrifugal chiller unit using electricity, and it was difficult to use the waste heat from the engine to the maximum.

The present invention was made in view of such circumstances and has an object to provide a chilled water system, and a method of operating the chilled water system which can operate the chiller in accordance with an increase/decrease of a cooling demand while available waste heat from the engine is efficiently consumed.

### Solution to Problem

In order to solve the above described problems, there is provided a chilled water system as set out in independent claim 1, and a method of operating a chilled water system as set out in independent claim 4. Advantageous developments are defined in the dependent claims.

That is, a chilled water system according to a first aspect is provided with a hot water supply system for generating hot water by waste heat from an engine, an absorption chiller unit for generating chilled water at a predetermined temperature by performing heat exchange with the hot water generated by the hot water supply system, and a hot water temperature control system for adjusting a supply hot water flow on the basis of a temperature of the supply hot water so that a temperature of the hot water supplied from the hot water supply system to the absorption chiller unit becomes constant.

According to this configuration, by adjusting the hot water flow supplied from the hot water supply system to the absorption chiller unit, the temperature of the hot water supplied to the absorption chiller unit is adjusted to become constant. Thus, even if an engine waste heat amount varies due to an increase/decrease of an engine load as in a ship, the hot water having a constant temperature is supplied to the absorption chiller unit with its flow rate changed. Therefore, the waste heat from the engine recovered in the hot water supply system does not have to be dumped to the sea but can be effectively used.

The waste heat from the engine is heat generated in the engine and heat in housing of the engine or heat of exhaust gas from the engine, for example. The waste heat from the engine is recovered from jacket cooling water of the engine or by an exhaust gas economizer which performs heat exchange with an exhaust gas of an engine.

In the first aspect, at least one or more centrifugal chiller units operated by electricity at a variable speed may be further provided, and a cooling capacity of the absorption chiller unit is used with priority for a cooling demand, while a cooling capacity which falls short in the cooling capacity of the absorption chiller unit is compensated for by a variable-speed operation of the electric centrifugal chiller unit and the number of operating electric centrifugal chiller units.

According to this configuration, the cooling capacity of the absorption chiller unit is used for the cooling demand with priority, and if the cooling demand increases, and the cooling capacity by the absorption chiller unit falls short, the cooling capacity is adjusted by an electric variable speed operation control of the centrifugal chiller unit. As a result, the entire cooling capacity can be increased. On the other hand, if the cooling demand decreases, the cooling capacity of the electric centrifugal chiller is reduced so as to reduce the entire cooling capacity while the cooling load of the absorption chiller unit is used to the maximum. The cooling capacity here indicates a generation capacity of a chilled water amount having a predetermined cool temperature.

A plurality of the electric centrifugal chillers may be provided, and the number of operating chillers may be controlled on the basis of cooling demand forecast.

In the first aspect, if the cooling load which falls short in the cooling capacity of the absorption chiller unit is to be compensated for by the electric centrifugal chiller unit, the electric centrifugal chiller unit may be operated at a variable speed with a minimum cooling capacity, and the cooling capacity of the absorption chiller unit may not be set to a maximum load capacity.

According to this configuration, when supply of the chilled water by a variable speed operation of the electric centrifugal chiller is added to the supply of the chilled water only from the absorption chiller unit in response to an increase/decrease of the cooling demand, the variable speed operation of the electric centrifugal chiller unit is performed at the minimum load capacity, and the cooling capacity of the absorption chiller unit is not operated at the maximum load capacity. By slightly reducing the cooling capacity instead of operating the absorption chiller unit at the maximum cooling capacity with the available waste heat by the absorption chiller unit, an operation according to the total amount of the cooling demand can be performed.

A chilled water system according to a second aspect is provided with a hot water supply system for generating hot water by waste heat from an engine, an absorption chiller unit for generating chilled water at a predetermined temperature by performing heat exchange with the hot water generated by the hot water supply system, and a chilled water flow control system for calculating a cooling capacity of the absorption chiller unit on the basis of a hot water heat amount by a flow rate and a temperature of the hot water obtained from the waste heat from the engine in the hot water supply system, and for adjusting a chilled water flow in accordance with the calculated cooling capacity.

According to this configuration, the cooling capacity of the absorption chiller unit is calculated on the basis of the hot water heat amount by the hot water flow rate and its temperature obtained from the waste heat of the engine in the hot water supply system, and the chilled water flow generated by the absorption chiller unit is adjusted on the basis of the calculated cooling capacity of the absorption chiller unit. As a result, the cooling capacity of the absorption chiller unit is controlled in accordance with the hot water heat amount obtained from the waste heat of the engine. Therefore, all the available waste heat from the engine can be used. On the other hand, in the conventional technologies, the chilled water amount for the absorption chiller unit is first requested, and a heat source is supplied so as to satisfy the requested chilled water amount. If an waste heat source is too small to satisfy the cooling demand, it becomes necessary to supply heat from a boiler not using the waste heat, and as a result, the operation becomes less economical than an operation of the electric centrifugal chiller unit.

A chilled water system according to a third aspect is provided with a hot water supply system for generating hot water by waste heat from an engine, an absorption chiller unit for generating chilled water at a predetermined temperature by performing heat exchange with the hot water generated by the hot water supply system, and a chilled water flow control system for calculating a cooling capacity of the absorption chiller unit on the basis of a hot water heat amount by a flow rate and a temperature of the hot water obtained from waste heat from the engine in the hot water supply system and a cooling water heat amount by a flow rate and a temperature of cooling water for cooling the absorption chiller unit, and for adjusting a chilled water flow at the predetermined temperature in accordance with the calculated cooling capacity, and the cooling capacity is calculated on the basis of the hot water heat amount by a hot water temperature and a hot water flow rate in the hot water supply system and the cooling water heat amount by a cooling water temperature and a cooling water flow rate, and the chilled water amount is adjusted by a control valve on the basis of a flow rate measured by a flow meter equipped in a chilled water system and an outlet temperature of the chilled water of the absorption chiller unit in accordance with the calculated cooling capacity.

According to this configuration, the cooling capacity of the absorption chiller unit is calculated on the basis of the hot water heat amount obtained from the waste heat of the engine in the hot water supply system and the cooling water heat amount of the cooling water such as sea water for cooling the absorption chiller unit, and the chilled water amount of the chilled water generated in the absorption chiller unit is adjusted on the basis of the calculated cooling capacity of the absorption chiller unit. Here, the hot water heat mount is acquired from a temperature and a flow rate of the hot water which are measured in the hot water supply system, and the cooling water heat amount is acquired from the temperature and the flow rate of the cooling water. Moreover, the chilled water amount is adjusted by the control valve on the basis of the flow rate measured by the flow meter equipped in the chilled water system and the outlet temperature of the chilled water of the absorption chiller unit in accordance with the calculated cooling capacity.

As a result, the cooling capacity of the absorption chiller unit changes in accordance with the hot water heat amount obtained from the waste heat of the engine. Therefore, all the available waste heat from the engine can be used. On the other hand, in the conventional technologies, the chilled water amount of the absorption chiller unit is first requested, and a heat source is supplied so as to satisfy the requested chilled water amount. If an waste heat source is too small to satisfy the cooling demand, it becomes necessary to supply heat from a boiler not using the waste heat, and as a result, the operation becomes less economical than an operation of the electric centrifugal chiller unit.

The cooling water is sea water or the like, and a flow rate of the cooling water is optimized and determined in accordance with a load of the absorption chiller unit at each cooling water temperature for energy saving, for example.

A ship according to a fourth aspect is provided with a hot water supply system for generating hot water by waste heat from an engine, an absorption chiller unit for generating chilled water at a predetermined temperature by performing heat exchange with the hot water generated by the hot water supply system, an onboard heat consumer other than the absorption chiller unit using the hot water generated by the hot water supply system, and a chilled water flow control system, for calculating a cooling capacity of the absorption chiller unit on the basis of a hot water heat amount by a flow rate and a temperature of the hot water obtained from the waste heat from the engine in the hot water supply system and excluding a flow rate required for the onboard heat consumers, and for adjusting a chilled water flow in accordance with the calculated cooling capacity.

According to this configuration, the cooling capacity required for the cooling demand is calculated on the basis of a hot water heat amount acquired from a available hot water flow rate in the hot water supply system (hot water flow rate excluding a hot water flow required for the onboard heat consumers other than the absorption chiller unit) and a hot water temperature of the hot water supply system. As a result, in the ship, the absorption chiller unit of the chilled water system can use an excess of the waste heat from the engine fully.

In the fourth aspect, the hot water supply system may perform heat exchange with a plurality of engine waste heat systems and distribute hot water to each of the engine waste heat systems in accordance with a waste heat amount of the engine waste heat system.

According to this configuration, the hot water flowing through the hot water supply system flows in each of the engine waste heat systems while taking a balance with a waste heat amount in each of the plurality of engine waste heat systems. Therefore, even if the waste heat from the each engine waste heat systems is not balanced, insufficient absorption of the waste heat from each of the engines does not occur easily in each of the absorption chiller units. That is, imbalance among the waste heat from each of the engines can be solved, the waste heat can be recovered to the maximum, and performances of the absorption chiller unit can be used to the maximum.

In the fourth aspect, a turbo charger or a gas turbine to which the exhaust gas from the engine is supplied, a heat exchanger for generating steam by performing heat exchange with the exhaust gas from the turbo charger or the gas turbine, and a steam turbine to which steam is supplied from the heat exchanger may be further provided.

According to this configuration, a part of exhaust gas energy from the engine is inputted into the gas turbine and recovered as rotational energy or a part of the exhaust gas energy is recovered in the turbo charger and pressurizes engine supply air. Moreover, energy of the exhaust gas flowing on the downstream side of the gas turbine or the turbo charger is heat-recovered in the heat exchanger and utilized as a hot water heat source of the absorption chiller unit. Moreover, an excess of the energy recovered in a heat recovering device can be inputted into the steam turbine so as to be recovered as rotational energy. The rotational energy recovered in the steam turbine is used as a power source of the centrifugal chiller unit or a power source of a generator, for example.

Since the exhaust gas of the gas turbine is extracted, an exhaust gas temperature is raised, more steam can be recovered by the heat exchanger, the centrifugal chiller unit can be driven directly by the gas turbine and the steam turbine or conversion to electricity by the steam turbine can be realized and thus, the cooling capacity of the absorption chiller unit can be improved, and an energy-saving system with a high degree of freedom can be constructed in accordance with a cooling demand onboard.

A method of operating a chilled water system according to a fifth aspect is a method of operating a chilled water system provided with a hot water supply system for generating hot water by performing heat exchange with waste heat from an engine and an absorption chiller unit for generating chilled water at a predetermined temperature by performing heat exchange with the hot water generated in the hot water supply system and has a step of adjusting a supply water amount of supply hot water so that a temperature of the supply hot water supplied from the hot water supply system to the absorption chiller unit becomes constant regardless of a waste heat amount from the engine recovered in the hot water supply system.

A method of operating a chilled water system according to a sixth aspect is a method of operating a chilled water system provided with a hot water supply system for generating hot water by performing heat exchange with waste heat from an engine and an absorption chiller unit for generating chilled water at a predetermined temperature by performing heat exchange with the hot water generated in the hot water supply system and has a step of calculating a cooling capacity of the absorption chiller unit on the basis of a hot water heat amount obtained from the waste heat from the engine in the hot water supply system, and adjusting a chilled water flow in accordance with the calculated cooling capacity.

A method of operating a chilled water system according to a seventh aspect is a method of operating a chilled water system provided with a hot water supply system for generating hot water by waste heat from an engine and an absorption chiller unit for generating chilled water at a predetermined temperature by performing heat exchange with the hot water generated in the hot water supply system and has a step of calculating a cooling capacity of the absorption chiller unit on the basis of a hot water heat amount obtained from the waste heat from the engine in the hot water supply system acquired by a hot water temperature and a hot water flow rate in the hot water supply system and a cooling water heat amount acquired by a cooling water temperature and a cooling water flow rate and a step of adjusting a chilled water flow by a control valve on the basis of a flow rate measured by a flow meter equipped in a chilled water system and an outlet temperature of the chilled water of the absorption chiller unit in accordance with the calculated cooling capacity.

### Advantageous Effects of Invention

According to the present invention, a chiller unit can be operated in accordance with an increase/decrease of a cooling demand by efficiently using available waste heat from the engine, and an energy-saving operation can be realized.

### Brief Description of Drawings

Fig. 1 is an outline configuration diagram illustrating a chilled water system according to a first embodiment of the present invention.
Fig. 2 is a graph illustrating a relationship between a cooling capacity with which the chilled water system according to the first embodiment of the present invention operates and a cooling demand onboard.
Fig. 3 is a flowchart illustrating an operation of the chilled water system according to the first embodiment of the present invention.
Fig. 4 is an outline configuration diagram illustrating a chilled water system according to a second example, which is not part of the present invention.
Fig. 5 is an outline configuration diagram illustrating a chilled water system according to a third example, which is not part of the present invention.
Fig. 6 is an outline configuration diagram illustrating a chilled water system according to a fourth example, which is not part of the present invention.

### Description of Embodiments

Embodiments according to the present invention will be described below by referring to the attached drawings.

### First embodiment

A chilled water system 1 according to a first embodiment of the present invention is applied to ships such as a passenger ship, for example.

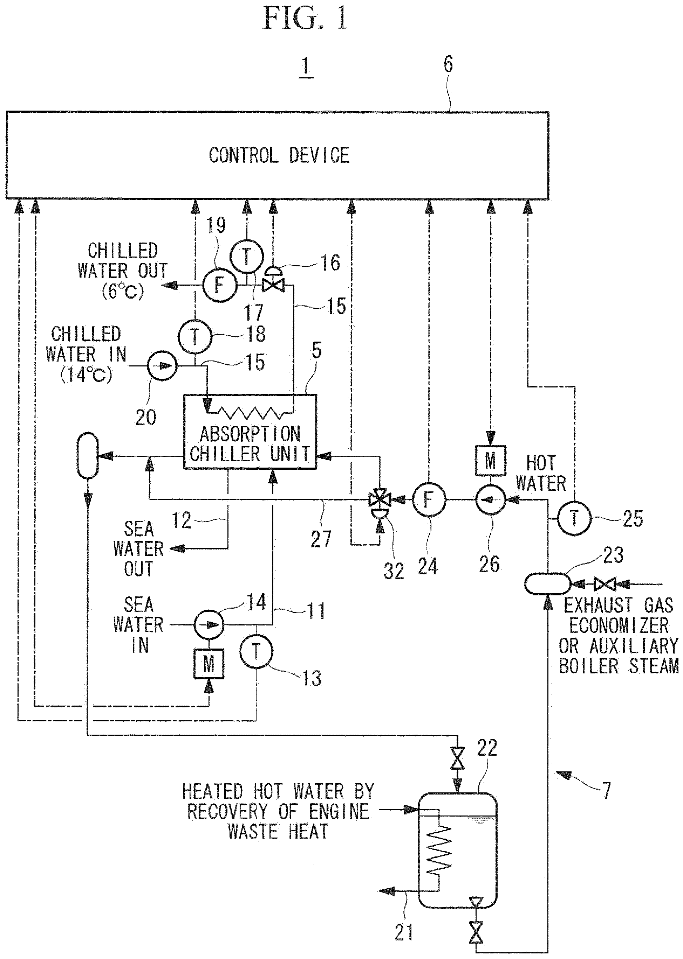

The chilled water system 1 according to this embodiment is provided with, as illustrated in Fig. 1, an absorption chiller unit 5, a control device 6, a hot water supply system 7 and the like. The absorption chiller unit 5 generates chilled water by using waste heat of an engine (a diesel engine, for example) of a ship. The control device 6 controls an operation of the absorption chiller unit 5. The hot water supply system 7 recovers the waste heat from the engine and supplies hot water to the absorption chiller unit 5. The waste heat recovered from the engine includes waste heat recovered by jacket cooling water of the engine and an exhaust gas economizer.

The absorption chiller unit 5 has an absorber, a regenerator, a condenser, and an evaporator, not shown. The absorption chiller unit 5 is a water-lithium bromide absorption chiller unit, for example, and water is worked as a refrigerant medium and lithium bromide as an absorbing liquid. The absorption chiller unit 5 generates a solution in which the refrigerant medium (water) is dissolved in the absorbing liquid in the absorber, applies heat recovered from the engine in the regenerator so as to have the heat medium (water) evaporate from the solution, and separates the refrigerant medium and the absorbing liquid from each other.

The refrigerant medium (water) is cooled by the condenser and liquefied. Then, the liquefied refrigerant medium (water) is fed to the evaporator and deprives chilled water supplied through a chilled water pipe of heat so as to generate the chilled water at a low temperature, and the refrigerant medium evaporates. The evaporated refrigerant medium is absorbed into the absorbing liquid in the absorber. The solution is fed to the regenerator again.

In the absorption chiller unit 5 installed in a ship, cooling water is supplied to the absorber and the condenser in order to lower a temperature inside the absorber or inside the condenser. Here, sea water, river water, lake water and the like are used as the cooling water, but since sea water is used as the cooling water onboard on the ocean, sea water is used as an example in description in this embodiment. A sea-water supply pipe 11 and a sea-water discharge pipe 12 are connected to the absorption chiller unit 5. In the sea-water supply pipe 11, a thermometer 13 for measuring a sea water temperature at an inlet of the absorption chiller unit 5 and a variable-speed pump 14 for controlling a sea water flow to be supplied to the absorption chiller unit 5 are installed. The pump 14 may operate at a constant speed but if sea water which temperature largely varied is used as cooling media, variable speed pump increases the effect of energy saving.

The chilled water generated in the absorption chiller unit 5 circulates through the ship, supplies a cold source to each cooling demand in the ship and returns to the absorption chiller unit 5. The generated chilled water has a predetermined temperature of 6°C, for example, and the chilled water returning to the absorption chiller unit 5 changes depending on an onboard demand but has a temperature of 14°C, for example. A chilled water flow is adjusted by a control device 6 so that an outlet temperature of the absorption chiller unit 5 becomes constant at the predetermined temperature (6°C). In a chilled water pipe 15 through which the chilled water flows, a control valve 16 for controlling the chilled water flow, thermometers 17 and 18 for measuring an inlet temperature or the outlet temperature, a flow meter 19 for measuring the chilled water amount, and a constant-speed pump 20 for boosting a pressure loss in the chilled water pipe 16 or the absorption chiller unit 5 are installed. The pump 20 can be variable speed type in order to obtain a larger energy-saving effect.

In the hot water supply system 7, a hot water heat exchanger 22 performing heat exchange with a thermal fluid (pressurized hot water) flowing through an waste heat recovery system 21 connected to an waste heat system of the engine or an engine cooler, for example, and a steam heat exchanger 23 through which steam for heating supplied from the exhaust gas economizer or an auxiliary boiler is introduced are installed. By thermally separating from the waste heat system of the engine or the engine cooler by the hot water heat exchanger 22, even if a function of oil tank heating and the like is added to the hot water supply system 7, an engine cooling system can be protected. High-temperature cooling water of the engine can be also supplied directly to the hot water supply system 7. Moreover, the hot water to the hot water supply system 7 is supplied while being kept at a predetermined constant temperature (a value appropriate for the system is selected in a range from 90 to 95 °C, for example), but there might be cases in which supply of a hot water flow rate to the absorption chiller unit 5 cannot follow a change of the cooling demand when the engine is at a low load during anchorage at a port or steam recovered from the waste heat is surplus with respect to the onboard steam demand, and by introducing the steam for heating through the steam heat exchanger 23, a hot water temperature can be adjusted, and a hot water flow rate can be ensured.

Moreover, in the hot water supply system 7, a flow meter 24 for measuring the hot water flow, a thermometer 25 for measuring a temperature of circulating hot water, and a circulation pump 26 for adjusting the hot water flow rate are provided. A heat amount recovered from an engine waste heat amount to the absorption chiller unit 5 is adjusted by the hot water flow rate by the circulation pump 26 with the hot water temperature made constant.

In the hot water supply system 7, a bypass pipe 27 bypassing the absorption chiller unit 5 is provided. A hot water flow through the absorption chiller unit 5 can be adjusted by preventing a part of the hot water from passing through the absorption chiller unit 5. As a result, if an engine load rapidly changes or if a cooling demand in the ship is small, follow-up performances can be improved, and hunting of hot water flow rate control of the circulation pump 26 against cooling load variation can be avoided.

Moreover, the chilled water system 1 according to this embodiment is provided with a centrifugal chiller unit, not shown. The centrifugal chiller unit is an electric driven at a variable speed, and the cooling demand which falls short in a cooling capacity of the absorption chiller unit 5 is compensated for by the centrifugal chiller unit.

If the cooling demand increases and the cooling capacity by the absorption chiller unit 5 falls short, the cooling capacity is adjusted by operation of the centrifugal chiller at an electric variable speed and the number of a centrifugal chiller units. As a result, the cooling capacity of the entire chilled water system 1 can be increased. On the other hand, if the cooling demand decreases, the cooling capacity of the centrifugal chiller unit is lowered, and the cooling capacity of the entire chilled water system 1 is reduced.

Here, since the centrifugal chiller unit uses electricity, an operation of the centrifugal chiller unit is preferably performed at a load as low as possible. Thus, the cooling capacity of the absorption chiller unit 5 is used with priority for the cooling demand. If the cooling demand increases and the cooling capacity by the absorption chiller unit 5 falls short, the cooling capacity is adjusted by operation of the centrifugal chiller unit at electric variable speed.

If the chilled water system 1 is provided with a plurality of the centrifugal chiller units, the number of operating chillers is controlled by cooling demand forecast, for example.

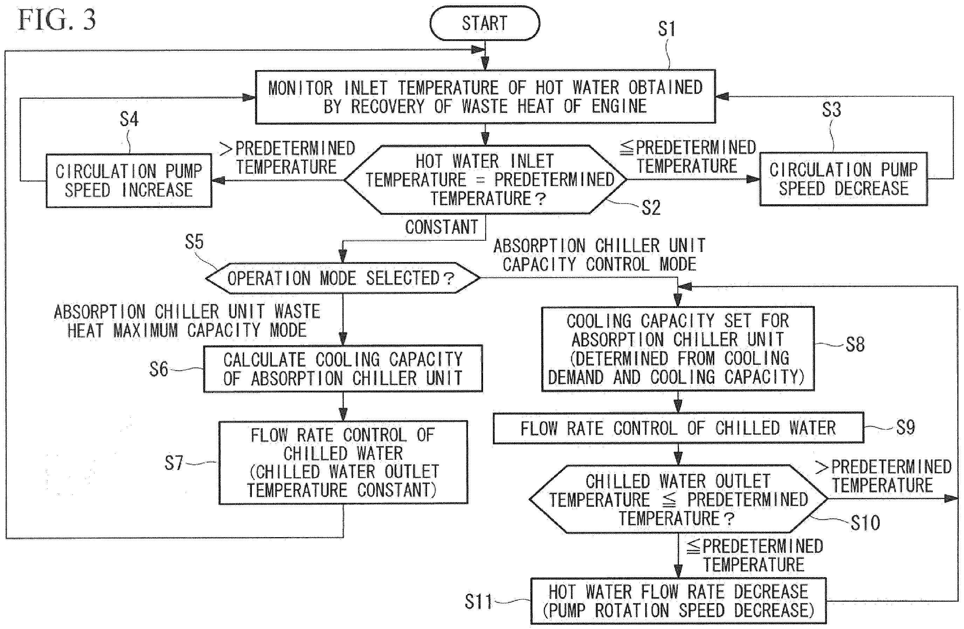

Subsequently, an operation method of the chilled water system 1 according to this embodiment will be described by referring to Fig. 3.

In the chilled water system 1 according to this embodiment, the absorption chiller unit 5 is operated and chilled water is generated by using a thermal fluid (pressurized hot water) for cooling a jacket of the engine or the thermal fluid (pressurized hot water or steam) subjected to heat exchange with the waste heat recovered by the exhaust gas economizer.

A flow rate of the hot water supplied to the absorption chiller unit 5 is adjusted by the control device 6 so that the inlet temperature of the hot water supplied to the absorption chiller unit 5 can keep a predetermined constant temperature (90°C, for example). Specifically, the inlet temperature of the absorption chiller unit 5 in the hot water supply system 7 is detected by the thermometer 25 (Step S1), a circulation flow rate of the hot water is adjusted by the circulation pump 26, and the circulation flow rate is measured by the flow meter 24 (Steps S2, S3, and S4).

As a result, even if the engine load of the ship increases/decreases and the waste heat amount changes, the supply hot water having the predetermined constant temperature is supplied to the absorption chiller unit 5 by changing the circulation flow rate of the hot water. Therefore, the waste heat from the engine recovered in the hot water supply system 7 can be effectively used without discarding the waste heat.

For example, if the engine load decreases, and the waste heat amount from the engine lowers or if the heat consumer demands rises, the hot water temperature of the hot water supply system 7 lowers to the predetermined temperature (90°C) or less. In this case, a speed of the circulation pump 26 is lowered (Step S3), the waste heat amount absorbed in the absorption chiller unit 5 is reduced, and the hot water temperature of the hot water supply system 7 is raised so as to become the predetermined temperature. On the other hand, if the engine load increases and the waste heat amount rises, the hot water temperature of the hot water supply system 7 rises to the predetermined temperature (90°C) or more. In this case, the speed of the circulation pump 26 is increased (Step S4), the waste heat amount absorbed in the absorption chiller unit 5 is increased, and the hot water temperature of the hot water supply system 7 is lowered so as to become the predetermined temperature.

The control device 6 controls the hot water flow rate so that the waste heat from the engine can be effectively used, but there can be cases in which the supply of the hot water flow rate cannot follow the change in the cooling capacity of the absorption chiller unit 5 due to a rapid load change on an engine side or a low load of the engine or the like, and thus, the absorption chiller unit 5 can be bypassed to the bypass pipe 27 using a three-way valve 32, or steam for heating can be introduced from the steam heat exchanger 23 so as to adjust the hot water temperature and to ensure the hot water flow rate, whereby the control can be made stable.

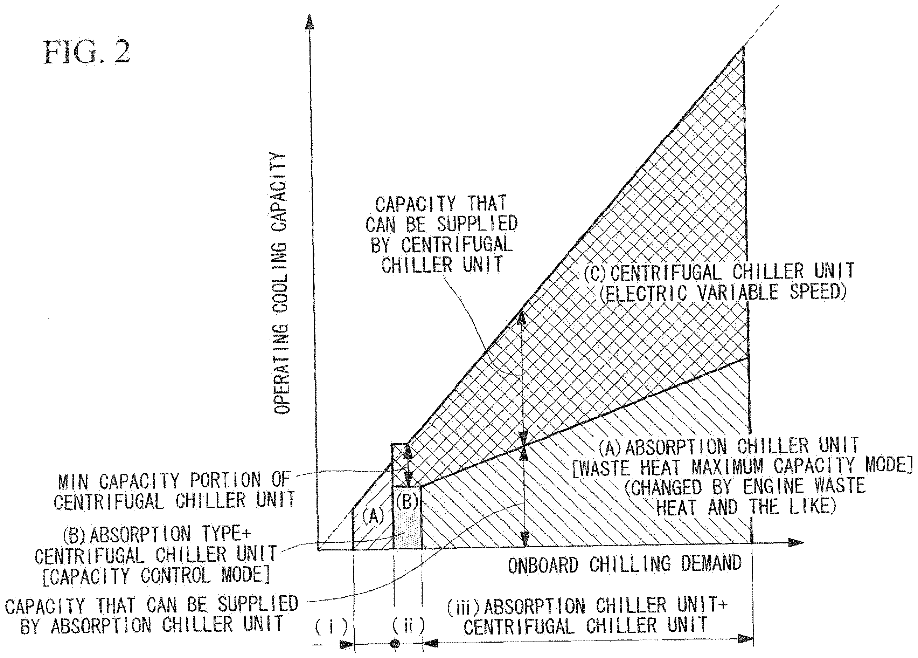

Fig. 2 is a graph illustrating a relationship between an onboard cooling demand and a cooling capacity obtained by operation of the chilled water system 1. In the chilled water system 1, an operation mode is selected in accordance with an onboard cooling demand, and a cooling capacity of the absorption chiller unit 5 or the centrifugal chiller unit is increased/decreased (Step S5).

A cooling capacity (A) zone in Fig. 2 indicates a cooling capacity that can be ensured by a single operation of the absorption chiller unit 5. The cooling capacity of the absorption chiller unit 5 can be increased/decreased in accordance with the cooling demand, but a shortage of the cooling capacity is handled by the centrifugal chiller unit that can control operation by electric variable speed. A cooling capacity (C) zone indicates a cooling capacity which needs to be ensured by a parallel operation of the centrifugal chiller unit.

In load sharing with respect to the operating cooling capacity of the absorption chiller unit 5 and the centrifugal chiller unit, consumption power in the centrifugal chiller unit is preferably reduced as long as the absorption chiller unit 5 is operated by the waste heat, and the absorption chiller unit 5 takes priority in use basically.

A cooling capacity (B) zone indicates a zone where the load shares in the cooling capacity by the absorption chiller unit 5 and the centrifugal chiller unit change according to an increase/decrease of the engine waste heat and an increase/decrease of the onboard heat consumer and the load by the absorption chiller unit 5. The shares in the cooling capacity (B) by the absorption chiller unit 5 and the centrifugal chiller unit need to be handled by the minimum cooling capacity present in the centrifugal chiller unit and thus, the absorption chiller unit 5 is set to have a capacity slightly lower than the available maximum cooling capacity.

That is, since the centrifugal chiller unit can ensure the minimum cooling capacity immediately after start, when the cooling capacity is to be shared by the absorption chiller unit 5 and the centrifugal chiller unit, the cooling capacity of the absorption chiller unit 5 is reduced. As a result, an unstable operation zone at a low load by the centrifugal chiller unit can be avoided, and an operation according to a total cooling demand can be realized. In this embodiment, the hot water temperature supplied to the absorption chiller unit 5 is made constant, while the chilled water flow is adjusted in accordance with the cooling capacity instructed by the control device 6 as will be described later and thus, the load of the absorption chiller unit 5 can be freely adjusted, whereby efficient operation can be realized.

If the onboard heat consumer load, the load by the absorption chiller unit 5 or the engine load changes, a flow rate of the circulation pump 26 is adjusted so that the inlet temperature of the hot water of the absorption chiller unit 5 obtained by recovery of the engine waste heat becomes constant at any time. At this time, the cooling capacity of the absorption chiller unit 5 is calculated by the control device 6 (Steps S6 and S8) by measuring the temperature and the flow rate of the hot water flowing into the absorption chiller unit 5.

If a hot water heat amount of the hot water supply system 7 increases/decreases due to the change in the waste heat amount from the engine, the cooling capacity of the absorption chiller unit 5 is consecutively calculated, the chilled water amount is adjusted by the flow rate control valve 16 so that the outlet temperature of the chilled water of the absorption chiller unit 5 becomes constant at a predetermined temperature (6°C, for example) on the basis of the calculated cooling capacity, and the flow rate is measured by the flow meter 19 (Steps S7 and S9 to S11).

In control of the conventional absorption chiller unit, the chilled water heat amount of the chilled water (or the temperature and the flow rate of the chilled water) is first requested in accordance with the cooling demand, and a heat source such as steam from the boiler is supplied so as to satisfy the requested chilled water amount. In this case, when the cooling demand increases to the waste heat from the engine or more, the electric centrifugal chiller unit having relatively good efficiency is not used, and thus, the heat by the oil-firing boiler should be supplied, which deteriorates the efficiency. On the other hand, in this embodiment, the cooling capacity of the absorption chiller unit 5 is calculated on the basis of the waste heat amount from the engine as the heat source, and the chilled water amount is adjusted with the outlet temperature of the chilled water at a predetermined constant temperature in response to this cooling capacity. Therefore, only the available waste heat can be fully used for the cooling capacity in the absorption chiller unit 5, which does not deteriorate the efficiency.

If the waste heat amount from the engine increases, the hot water heat amount of the hot water supply system 7 also increases. If the hot water heat amount increases, the cooling capacity can also rise. Thus, the control device 6 calculates the cooling capacity of the absorption chiller unit 5 on the basis of the hot water heat amount (calculated from the temperature and the flow rate of the hot water.) and the sea water heat amount for cooling (calculated from the sea water temperature and flow rate.). Then, the flow rate of the chilled water having the chilled water temperature as the predetermined temperature is adjusted having the calculated cooling capacity as a target value. For example, if the calculated cooling capacity rises, the flow rate of the chilled water increases for that portion. As a result, the hot water heat amount is consumed (absorbed) in accordance with the calculated cooling capacity so that the load of the absorption chiller unit 5 is adjusted. That is, the load of the absorption chiller unit 5 changes in accordance with the waste heat amount.

The cooling capacity of the absorption chiller unit 5 rises if the waste heat amount increases and lowers if the waste heat amount decreases. That is, since the load of the absorption chiller unit 5 is changed in accordance with the waste heat amount so that all the available waste heat is used, the waste heat can be utilized without dumping energy.

The flow rate of the chilled water is adjusted by controlling the control valve 16 of a chilled water system on the basis of the flow rate measured by the flow meter 19 equipped in the chilled water system and the chilled water outlet temperature on the basis of the calculation by the control device 6.

Subsequently, an operation method of the chilled water system 1 if the onboard cooling demand increases or decreases will be described by referring to Fig. 2.
(i) In the case of single operation of absorption chiller unit 5: (waste heat maximum capacity mode of absorption chiller unit 5)
   Corresponds to the cooling capacity (A) zone in Fig. 2. The chilled water system 1 calculates the cooling capacity volume of the absorption chiller unit 5 on the basis of the hot water heat amount and the sea water heat amount for cooling supplied to the absorption chiller unit 5 (Step S6). Then, setting the calculated cooling capacity volume as a target value, the flow rate of the chilled water is adjusted with the chilled water temperature set as the predetermined temperature (Step S7). As a result, in a range in which the steam for heating does not have to be inputted into the steam heat exchanger 23 by starting the auxiliary boiler for increasing the hot water flow rate, all the available waste heat from the engine can be used. If the temperature of the hot water supply system 7 lowers and the hot water heat amount falls short, the steam for heating of the auxiliary boiler may be inputted into the steam heat exchanger 23 of the hot water supply system 7 so as to raise the hot water temperature and to handle the sudden shortage of the hot water heat amount.
(ii) In the case of operation of absorption chiller unit 5 and operation with minimum cooling capacity portion of centrifugal chiller unit: (capacity control mode of absorption chiller unit 5)
   Corresponds to the cooling capacity (B) zone in Fig. 2. If there is a minimum cooling capacity portion of the centrifugal chiller unit, by operating the centrifugal chiller unit with the minimum load capacity at a variable speed and by slightly lowering the cooling capacity of the absorption chiller unit 5 automatically without using the maximum cooling capacity with the available waste heat, an operation according to the total cooling load onboard becomes possible. The absorption chiller unit 5 calculates the cooling capacity of the absorption chiller unit 5 (Step S8) on the basis of the onboard cooling demand and the required cooling capacity, and adjusts the chilled water amount so that the outlet temperature of the chilled water becomes constant (Step S9). For example, if it is determined that the outlet temperature of the chilled water is the predetermined temperature or less (Step S10), the flow rate of the hot water flowing through the hot water supply system 7 is reduced (Step S11). On the other hand, if the outlet temperature of the chilled water is higher than the predetermined temperature, the cooling capacity of the absorption chiller unit 5 is calculated again (Step S8), and the chilled water flow is adjusted so that the outlet temperature of the chilled water becomes constant (Step S9).
(iii) If absorption chiller unit 5 and centrifugal chiller unit operate in parallel and moreover, load of centrifugal chiller unit exceeds minimum load:
   Corresponds to the cooling capacity (C) zone in Fig. 2. A shortage of demand in the onboard cooling demand in the absorption chiller unit 5 is compensated for by the centrifugal chiller unit. The absorption chiller unit 5 returns to the (i) waste heat maximum capacity mode again and calculates the cooling capacity of the absorption chiller unit 5 on the basis of the hot water heat amount and the sea water heat amount for cooling supplied to the absorption chiller unit 5 by using the absorption chiller unit 5 with priority. Then, by setting the calculated cooling capacity as a target value, the flow rate of the chilled water having the chilled water temperature as the predetermined temperature is adjusted. As a result, all the available waste heat from the engine can be used.

As described above, according to this embodiment, control corresponding to the cooling demand by using the absorption chiller unit 5 with priority can be executed, high COP (Coefficient Of Performance) operation by using the waste heat, and an energy-saving operation become possible. Moreover, the energy-saving operation become possible by control using all the available waste heat from the engine.

### Second example

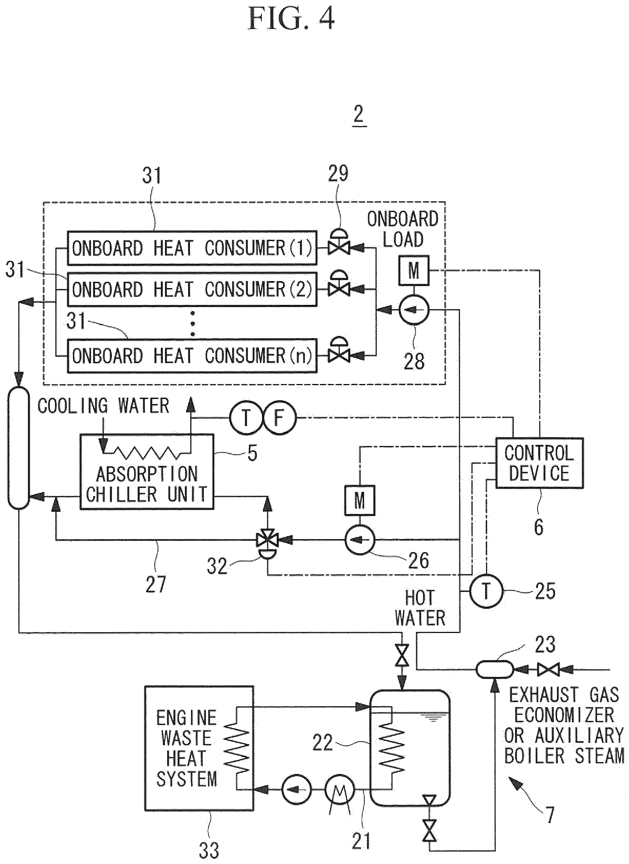

Subsequently, a chilled water system 2 according to a second embodiment of the present invention will be described by referring to Fig. 4.

The chilled water system 2 according to this embodiment is a system using waste heat recovered by a thermal fluid for cooling a jacket of an engine (pressurized hot water) and the like with priority to the absorption chiller unit 5. The chilled water system 2 is provided with a plurality of onboard heat consumer 31 other than the absorption chiller unit 5. A hot water amount to the onboard heat consumers 31 is adjusted by a pump 28 and a control valve 29.

The waste heat recovery system 21 transmits engine waste heat (jacket cooling water of the engine) to the hot water by pressurized hot water and a hot water heat exchanger 22. Moreover, in the hot water supply system 7, the steam heat exchanger 23 is provided so that steam which is generated by the engine waste heat (exhaust gas economizer) and becomes excess to the onboard steam demand is introduced and can keep the hot water temperature at a predetermined constant temperature and increase a hot water flow rate.

The hot water supply system 7 is, as illustrated in Fig. 4, made independent of the waste heat recovery system 21 so that an influence on an operation of the engine is suppressed, but if the onboard heat consumer 31 is small or if there is no onboard heat consumer 31 such as an oil-system heater or the like, the hot water supply system 7 and the waste heat recovery system 21 can be made into one system.

Similarly to the first embodiment, in controlling the heat to be absorbed by the absorption chiller unit 5 in accordance with the engine waste heat amount, the hot water is adjusted so as to have a predetermined constant temperature (90°C, for example) by controlling a flow rate of the circulation pump 26 by the control device 6, and an absorbed heat amount in the absorption chiller unit 5 is controlled.

The cooling capacity required for a cooling demand is calculated by the control device 6 on the basis of a hot water heat amount acquired from a hot water available flow rate (less a hot water amount required for the onboard heat consumer 31 other than the absorption chiller unit 5) and a hot water temperature of the hot water supply system 7 and moreover on the basis of a sea water heat amount for cooling (calculated from a sea water temperature and a flow rate.), not shown. In the absorption chiller unit 5, a chilled water amount is calculated from the cooling capacity and a predetermined outlet temperature (6°C, for example) of the chilled water so that the calculated absorption from the hot water heat amount can be obtained, and a flow rate of a chilled water system is controlled.

As a result, a ship using this embodiment can effectively use waste heat from the engine in the absorption chiller unit 5 by operating the absorption chiller unit 5 with priority on the basis of the cooling capacity calculated by the waste heat from the engine, and energy saving can be realized.

By providing the three-way valve 32 on an inlet side of the hot water of the absorption chiller unit 5 for bypassing to the bypass pipe 27, even if a change in the hot water flow rate cannot be followed in the case of a rapid decrease in the waste heat from the engine, a temperature change in a closed circuit of the hot water supply system 7 can be kept small, and the control can be stable.

### Third example

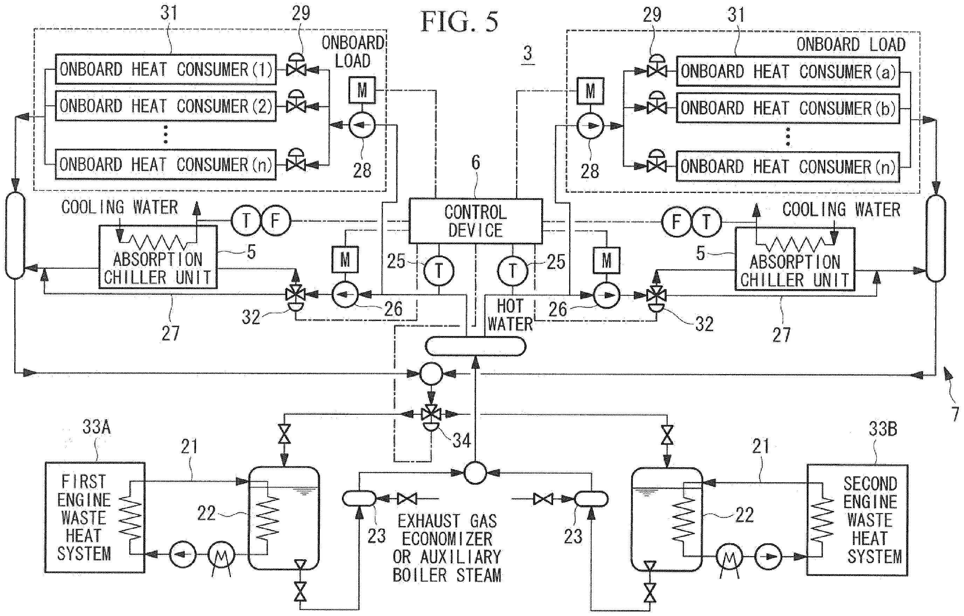

Subsequently, a chilled water system 3 according to a third embodiment of the present invention will be described by referring to Fig. 5.

The chilled water system 3 according to this embodiment illustrates an example of a system using two engine waste heat systems. The example illustrated in Fig. 5 is an example in which there are a plurality of waste heat recovery systems 21 from engines, and the present invention is not limited to two systems.

If waste heat from a first engine waste heat system 33A and a second engine waste heat system 33B is not balanced, the waste heat from each of the engines cannot be sufficiently absorbed in the two absorption chiller units 5. Thus, in this embodiment, the hot water supply system 7 is provided so as to support both the first engine waste heat system 33A and the second engine waste heat system 33B, and a three-way valve 34 for distributing hot water to each of a first engine waste heat system 33A side and a second engine waste heat system 33B side, respectively is provided.

As a result, the hot water flowing through the hot water supply system 7 flows separately through the first engine waste heat system 33A side and the second engine waste heat system 33B side through the three-way valve 34 by taking a balance between waste heat amounts of the first engine waste heat system 33A and the second engine waste heat system 33B.

A ship using this embodiment can thereby solve imbalance of waste heat from each of the engines, recover the waste heat at the maximum and use performances of the absorption chiller units 5 to the maximum.

### Fourth example

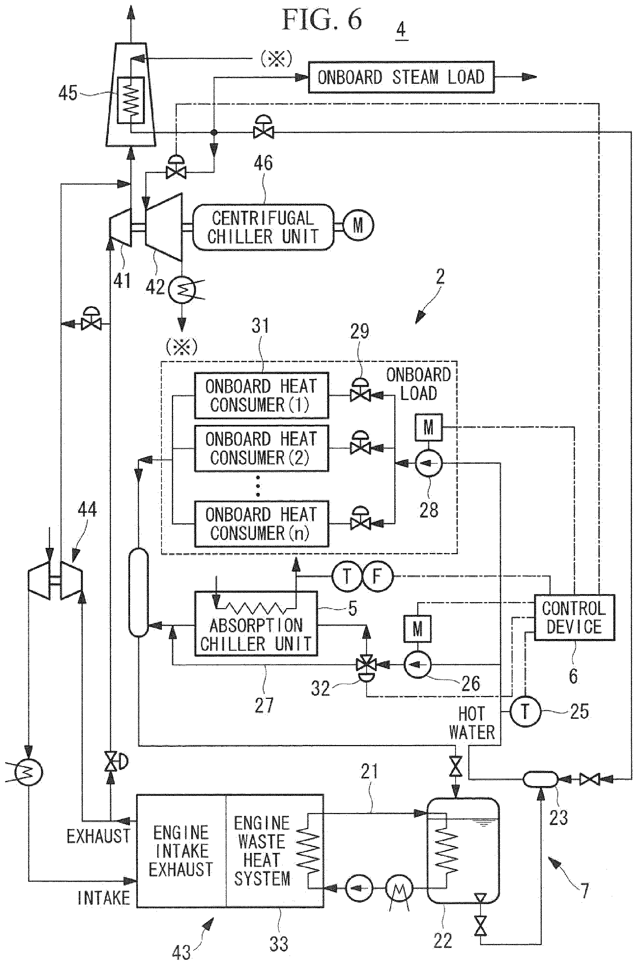

Subsequently, a heat recovery system 4 according to a fourth embodiment of the present invention will be described by referring to Fig. 6. Fig. 6 illustrates the heat recovery system 4 to which the chilled water system 2 according to the above described second embodiment is applied, but the present invention is not limited to this example. For example, the chilled water system 1 or 3 according to the first or third embodiment may be applied.

The heat recovery system 4 is provided with, as illustrated in Fig. 6, a power turbine 41 (gas turbine) and a steam turbine 42. A part of exhaust gas energy from an engine 43 is inputted into the power turbine 41 and recovered as rotational energy, and a part of exhaust gas energy is recovered by a turbo charger 44 and used to pressurize an engine supply air. Moreover, energy of an exhaust gas flowing on a downstream of the power turbine 41 and the turbo charger 44 is heat-recovered by an exhaust gas economizer 45 (heat exchanger) and used as a hot water heat source of an onboard steam load and the absorption chiller unit 5 or other heat consumer 31 than the absorption chiller unit 5. Alternatively, if an onboard cooling load and the onboard heat consumer are small, an excess of the energy recovered by the exhaust gas economizer 45 is inputted into the steam turbine 42 and recovered as rotational energy. The rotational energy recovered by the steam turbine 42 is used as a power source of the centrifugal chiller unit 46 or a power source of a generator.

Since the heat recovery system 4 extracts an exhaust gas of the power turbine 41, an exhaust gas temperature rises, more steam can be recovered by the exhaust gas economizer 45, the centrifugal chiller unit 46 can be directly driven by the power turbine 41 and the steam turbine 42, and conversion to electricity by the steam turbine 42 can be realized. Thus, a ship using this embodiment can improve the cooling capacity of the absorption chiller unit 5 and construct an energy-saving system with a high degree of freedom in accordance with a chilling demand onboard.

### Reference Signs List

1, 2, 3 chilled water system
4 heat recovery system
5 absorption chiller unit
6 control device (hot water temperature flow control system, chilled water flow control system)
7 hot water supply system

## Claims

1. A chilled water system (1) comprising:
a hot water supply system (7) for generating hot water by waste heat from an engine, wherein a hot water heat exchanger (22) performing heat exchange with a thermal fluid flowing through a waste heat recovery system (21) connected to a waste heat system of the engine and a steam heat exchanger (23) through which steam for heating supplied from an exhaust gas economizer or an auxiliary boiler is introduced are installed;
an absorption chiller unit (5) for generating chilled water at a predetermined temperature by performing heat exchange with the hot water generated by the hot water supply system (7); and
a hot water temperature control system (6) for adjusting a supply hot water flow on the basis of a temperature of the supply hot water so that a temperature of the supply hot water supplied from the hot water supply system (7) to the absorption chiller unit (5) becomes constant, the chilled water system (1) further comprising:
a flow meter (24) for measuring the hot water flow;
a thermometer (25) for measuring a temperature of circulating hot water; and
a circulation pump (26) provided in the hot water supply system (7) and configured to adjust a hot water flow rate, wherein
if a temperature of the supply hot water lowers to the predetermined constant temperature or less, a speed of the circulation pump (26) is controlled to be lowered, thereby reducing the waste heat amount absorbed in the absorption chiller unit (5), and
if a temperature of the supply hot water rises to the predetermined constant temperature or more, a speed of the circulation pump (26) is controlled to be increased, thereby increasing the waste heat amount absorbed in the absorption chiller unit (5).

2. The chilled water system (1) according to claim 1, further comprising:
at least one or more electric centrifugal chiller units (46) operated by electricity at a variable speed, wherein
a cooling capacity of the absorption chiller unit (5) is used with priority for a cooling load; and
a cooling demand which falls short in the cooling capacity of the absorption chiller unit (46) is compensated for by a variable-speed operation of the electric centrifugal chiller unit (46) and the number of operating electric centrifugal chiller units (46).

3. The chilled water system (1) according to claim 2, wherein
if the cooling demand which falls short in the cooling capacity of the absorption chiller unit (5) is to be compensated for by the electric centrifugal chiller unit (46), the electric centrifugal chiller unit (46) is operated at a variable speed with a minimum load capacity, and the cooling capacity of the absorption chiller unit (5) is not set to a maximum load capacity.

4. A method of operating a chilled water system (1) according to claim 1, comprising the steps of:
adjusting a supply hot water flow on the basis of a temperature of the supply hot water so that a temperature of the supply hot water supplied from the hot water supply system (7) to the absorption chiller unit (5) becomes constant,
if a temperature of the supply hot water lowers to the predetermined constant temperature or less, controlling a speed of the circulation pump (26) to be lowered, thereby reducing the waste heat amount absorbed in the absorption chiller unit (5), and
if a temperature of the supply hot water rises to the predetermined constant temperature or more, controlling a speed of the circulation pump (26) to be increased, thereby increasing the waste heat amount absorbed in the absorption chiller unit (5).

## Patentansprüche

1. Gekühltes Wassersystem (1), aufweisend:
ein Heißwasserversorgungssystem (7) zum Erzeugen von heißem Wasser durch Abwärme von einem Motor, wobei ein Heißwasserwärmetauscher (22), der einen Wärmetausch mit einem thermischen Fluid durchführt, das durch ein Abwärme-Wiedergewinnungssystem (21) strömt, das mit einem Abwärmesystem des Motors verbunden ist, und ein Dampfwärmetauscher (23) installiert sind, durch welchen Dampf zum Erwärmen eingelassen wird, der von einem Abgasvorwärmer oder einem Nebenkessel zugeführt ist;
eine Absorptionskühleinheit (5) zum Erzeugen von gekühltem Wasser bei einer vorbestimmten Temperatur, indem ein Wärmetausch mit dem durch das Heißwasserversorgungssystem (7) erzeugten heißen Wasser durchgeführt wird; und
ein Heißwassertemperatur-Steuersystem (6) zum Einstellen einer Heißwasserzufuhrströmung auf der Basis einer Temperatur der Heißwasserzufuhr, so dass eine Temperatur der von dem Heißwasserzufuhrsystem (7) der Absorptionskühleinheit (5) zugeführten Heißwasserzufuhr konstant wird, wobei das Kühlwassersystem (1) ferner aufweist:
ein Strömungsmessgerät (24) zum Messen der Heißwasserströmung;
ein Thermometer (25) zum Messen einer Temperatur von zirkulierendem heißem Wasser; und
eine Zirkulationspumpe (26), die in dem Heißwasserversorgungssystem (7) vorgesehen und konfiguriert ist, um eine Heißwasserströmungsrate einzustellen, wobei
falls sich eine Temperatur der Heißwasserzufuhr auf die vorbestimmte konstante Temperatur oder eine kleinere verringert, eine Geschwindigkeit der Zirkulationspumpe (26) gesteuert wird, um verringert zu werden, wodurch die in der Absorptionskühleinheit (5) absorbierte Abwärmemenge verringert wird, und
falls eine Temperatur der Heißwasserzufuhr auf die vorbestimmte konstante Temperatur oder eine höhere ansteigt, eine Geschwindigkeit der Zirkulationspumpe (26) gesteuert wird, um erhöht zu werden, wodurch die in der Absorptionskühleinheit (5) absorbierte Abwärmemenge erhöht wird.

2. Gekühltes Wassersystem (1) nach Anspruch 1, ferner aufweisend:
zumindest eine oder mehrere elektrische Zentrifugalkühleinheiten (46), die durch Strom mit einer variablen Geschwindigkeit betrieben werden, wobei
eine Kühlkapazität der Absorptionskühleinheit (5) mit einer Priorität für eine Kühllast verwendet wird; und
ein Kühlbedarf, welcher die Kühlkapazität der Absorptionskühleinheit (46) nicht erreicht, durch einen variablen Geschwindigkeitsbetrieb der elektrischen Zentrifugalkühleinheit (46) und die Anzahl an betriebenen elektrischen Zentrifugalkühleinheiten (46) kompensiert wird.

3. Gekühltes Wassersystem (1) nach Anspruch 2, wobei
falls der Kühlbedarf, welcher die Kühlkapazität der Absorptionskühleinheit (5) nicht erreicht, durch die elektrische Zentrifugalkühleinheit (46) zu kompensieren ist, die elektrische Zentrifugalkühleinheit (46) mit einer variablen Geschwindigkeit mit einer minimalen Lastkapazität betrieben wird, und die Kühlkapazität der Absorptionskühleinheit (5) nicht auf eine maximale Lastkapazität eingestellt wird.

4. Verfahren zum Betreiben eines gekühlten Wassersystems (1) nach Anspruch 1, mit den Schritten:
Einstellen einer Heißwasserzufuhrströmung auf der Basis einer Temperatur der Heißwasserzufuhr, so dass eine Temperatur der von dem Heißwasserzufuhrsystem (7) der Absorptionskühleinheit (5) zugeführte Heißwasserzufuhr konstant wird,
falls sich eine Temperatur der Heißwasserzufuhr auf die vorbestimmte konstante Temperatur oder eine kleinere verringert, Steuern einer Geschwindigkeit der Zirkulationspumpe (26), um verringert zu werden, wodurch die in der Absorptionskühleinheit (5) absorbierte Abwärmemenge verringert wird, und
falls eine Temperatur der Heißwasserzufuhr auf die vorbestimmte konstante Temperatur oder eine höhere ansteigt, Steuern einer Geschwindigkeit der Zirkulationspumpe (26), um erhöht zu werden, wodurch die in der Absorptionskühleinheit (5) absorbierte Abwärmemenge erhöht wird.

## Revendications

1. Système (1) d'eau réfrigérée, comprenant :
un système (7) d'alimentation en eau chaude pour produire de l'eau chaude par de la chaleur perdue d'un moteur, dans lequel sont montés un échangeur (22) de la chaleur de l'eau chaude, effectuant un échange de chaleur avec un fluide thermique passant dans un système (21) de récupération de la chaleur perdue relié à un système de chaleur perdue du moteur, et un échangeur (23) de chaleur de vapeur, par lequel de la chaleur pour le chauffage, fournie par un économiseur de gaz d'échappement ou par une chaudière auxiliaire, est introduite ;
une unité (5) de réfrigérateur par absorption, pour produire de l'eau réfrigérée à une température déterminée à l'avance, en effectuant un échange de chaleur avec l'eau chaude produite par le système (7) d'alimentation en eau chaude et
un système (6) de réglage de la température de l'eau chaude pour régler un courant d'eau chaude d'alimentation sur la base d'une température de l'eau chaude d'alimentation, de manière à ce qu'une température de l'eau chaude d'alimentation, envoyée du système (7) d'alimentation en eau chaude à l'unité (5) de réfrigérateur par absorption, devienne constante, le système (1) d'eau réfrigérée comprenant, en outre :
un débit-mètre (24), pour mesurer le débit d'eau chaude ;
un thermomètre (25), pour mesurer une température de l'eau chaude en circulation et
une pompe (26) de circulation prévue dans le système (7) d'alimentation en eau chaude et configurée pour régler un débit d'eau chaude,
dans lequel
si une température de l'eau chaude d'alimentation s'abaisse à la température constante déterminée à l'avance ou en dessous, une vitesse de la pompe (26) de circulation est commandée de manière à être diminuée, en réduisant ainsi la quantité de chaleur perdue absorbée dans l'unité (5) de réfrigérateur par absorption et
si une température de l'eau chaude d'alimentation s'élève à la température constante déterminée à l'avance ou au-dessus, une vitesse de la pompe (26) de circulation est commandée, afin d'être augmentée en augmentant ainsi la quantité de chaleur perdue absorbée dans l'unité (5) de réfrigérateur par absorption.

2. Système (1) d'eau réfrigérée suivant la revendication 1, comprenant, en outre :
au moins une ou plusieurs unités (46) de réfrigérateur électrique centrifuge fonctionnant à l'électricité à une vitesse variable, dans lequel
une capacité de refroidissement de l'unité (5) de réfrigérateur par absorption est utilisée en priorité pour une charge de refroidissement et
une demande de refroidissement, que la capacité de refroidissement de l'unité (46) de réfrigérateur par absorption ne peut pas satisfaire, est compensée par un fonctionnement à vitesse variable de l'unité (46) électrique de réfrigérateur centrifuge et par le nombre d'unités (46) électriques de réfrigérateur centrifuge en fonctionnement.

3. Système (1) d'eau réfrigérée suivant la revendication (2), dans lequel
si la capacité de refroidissement de l'unité (5) de réfrigérateur par absorption ne peut pas satisfaire la demande de refroidissement, elle est compensée par l'unité (46) électrique de réfrigérateur centrifuge, l'unité (46) électrique de réfrigérateur centrifuge fonctionnant à une vitesse variable à une capacité de charge minimum et la capacité de refroidissement de l'unité (5) de réfrigérateur par absorption n'est pas fixée à une capacité de charge maximum.

4. Système (1) d'eau réfrigérée suivant la revendication 1, comprenant les stades de :
réglage d'un courant d'eau chaude d'alimentation sur la base d'une température de l'eau chaude d'alimentation, de manière à ce qu'une température de l'eau chaude d'alimentation, envoyée du système (7) d'alimentation en eau chaude à l'unité (5) de réfrigérateur par absorption, devienne constante,
si une température de l'eau chaude d'alimentation s'abaisse à la température constante déterminée à l'avance ou y devient inférieure, réglage d'une vitesse de la pompe (26) de circulation, pour qu'elle devienne plus petite, en réduisant la quantité de chaleur perdue absorbée dans l'unité (5) de réfrigérateur par absorption et
si une température de l'eau chaude d'alimentation s'élève à la température constante déterminée à l'avance ou au-dessus, réglage d'une vitesse de la pompe (26) de circulation, pour qu'elle soit augmentée, en augmentant ainsi la quantité de chaleur perdue absorbée dans l'unité (5) de réfrigérateur par absorption.
